# EUROPEAN PATENT APPLICATION

(11) **EP 1 473 456 A1**
(43) Date of publication of application: **03.11.2004**
(21) Application number: 03701874.4
(22) Date of filing: 27.01.2003
(51) Int. Cl.: F02D 45/00

(54) **VEHICLE TROUBLE DIAGNOSIS SYSTEM**

(30) Priority: 04.02.2002 JP 2002026418
(71) Applicant: Bosch Automotive Systems Corporation, Tokyo 150-0002 (JP)
(72) Inventor: MATSUZAKI, Hideaki, Bosch Automotive Systems Corp., Higashimatsuyama-shi, Saitama 355-8603 (JP); WATANABE, Yasumasa, Bosch Automotive Systems Corp., Higashimatsuyama-shi, Saitama 355-8603 (JP); SATO, Eiichi, Bosch Automotive Systems Corp., Higashimatsuyama-shi, Saitama 355-8603 (JP); KAWANO, Tomoyuki, Bosch Automotive Systems Corp., Higashimatsuyama-shi, Saitama 355-8603 (JP)
(74) Representative: Schwabe - Sandmair - Marx
(86) International application number: PCT/JP2003/000718
(87) International publication number: WO 2003/067063

(57) **Abstract**

In an automotive failure diagnosing system configured to conduct malfunction diagnosing display by operating a lamp (5) in response to a CPU hang-up detection signal (WDA) output from a microcomputer (2) that monitors whether a control microcomputer (1) is hung up and to deliberately output a CPU hang-up detection signal (WDA) for malfunction diagnosis before the execution of control by the microcomputer (1) is commenced, a transistor (4A) is turned on to keep the lamp (5) continuously lit from the time that an ignition switch is switched from off to on to the time that a light-up operation for checking the lamp (5) is commenced, thereby preventing the lamp (5) from assuming a flickering condition when the lamp (5) is checked.

## Description

### TECHNICAL FIELD

The present invention relates to an automotive failure diagnosing system for diagnosing failure of a computer used to control an internal combustion engine and other automotive systems and displaying the result of the failure diagnosis.

### BACKGROUND ART

Motor vehicles that use a microcomputer to control the operation of an internal combustion engine and other vehicle systems are usually equipped with an automotive failure diagnosing system for performing suitably timed failure diagnosis of the microcomputer for operational malfunctions. When the failure diagnosing system discovers a malfunction such as that the CPU is hung up, it notifies the operator of the diagnosing results by activating a lamp or other prescribed display member.

Some conventional failure diagnosing systems of this type are equipped with a monitoring means provided separately of the diagnosed control microcomputer for monitoring the operation of the control microcomputer. The monitoring means deliberately produces a CPU hang-up detection signal at a time when the control microcomputer appears to be operating normally, the control microcomputer operates in response to the intentionally produced CPU hang-up detection signal, and the monitoring means is used to check whether the CPU hang-up detection signal triggers prescribed behavior in the control system under the control microcomputer, thereby making it possible to determine whether the control microcomputer is actually operating normally.

However, when this conventional failure diagnosing system configured to check whether or not the microcomputer is operating normally by deliberately producing a CPU hang-up detection signal is adopted, the display section of the failure diagnosing system also responds to the deliberately output CPU hang-up detection signal, by activating the display member for notifying the operator of malfunctions. Since the operator is therefore misled to think that the microcomputer is actually hung up, he or she is liable to take inappropriate action.

One conceivable way to avoid situations in which the operator is likely to perform an undesirable engine control operation when the engine is stopped or its output reduced in response to the deliberate output of a CPU hang-up detection signal would be to time the production of the deliberate CPU hang-up detection signal for confirming normal CPU operation to fall within a period for executing an initialization task that precedes the control period (ordinary control period) during which the vehicle operation is affected such as by operating the engine to set the vehicle into motion.

In most automotive warning display systems, the various warning lamps are clustered at one location and are first turned on all at once for a prescribed period of time when the ignition switch is switched from off to on. This is for allowing the operator to check whether any lamps have burned out.

Therefore, if the foregoing failure diagnosing system should be applied to a system that facilitates a lamp burnout check by lighting up all of display lamps when the ignition switch is turned on, the flickering or the like of only the CPU hang-up display lamp in response to the CPU hang-up detection signal deliberately output for checking CPU operation would result in lamp lighting that differs from that of the other lamps in the cluster when they are lit to check for lamp burnout. This would be a problem because it would make the operator feel uneasy upon turning on the ignition switch.

An object of the present invention is to provide an automotive failure diagnosing system that overcomes the aforesaid problems of the prior art.

Another object of the present invention is to provide an automotive failure diagnosing system that enables the result of an automotive microcomputer operation check to be displayed using a display lamp without causing the operator anxiety.

### DISCLOSURE OF THE INVENTION

The present invention provides an automotive failure diagnosing system comprising: monitoring means for monitoring whether a control microcomputer is hung up and outputting a CPU hang-up detection signal when the microcomputer hangs up; and a light-emitting display element that operates in response to the CPU hang-up detection signal output by the monitoring means, a CPU hang-up detection signal for diagnosing failure of the microcomputer being deliberately output from the monitoring means before execution of prescribed control by the microcomputer is commenced, which automotive failure diagnosing system is characterized in that the light-emitting display element is kept continuously lit from the time that an ignition switch is switched from off to on to the time that a light-up operation for checking the light-emitting display element is commenced.

This configuration keeps the light-emitting display element continuously lit from the time that the ignition switch is switched from off to on to the time that the light-up operation for checking the operation of the light-emitting display element is commenced. Therefore, when the CPU hang up detection signal for failure diagnosis is deliberately output before the light-up operation for checking the light-emitting display element, the output of the CPU hang-up detection signal is prevented from causing the light-emitting display element to flicker or otherwise operate differently from the other light-emitting display elements.

### BRIEF DESCRIPTION OF THE DRAWINGS

Fig. 1 is a circuit diagram showing an automotive failure diagnosing system that is an embodiment of the present invention.
Fig. 2 is a drawing for explaining the operation of the automotive failure diagnosing system shown in Fig. 1.

### BEST MODE OF CARRYING OUT THE INVENTION

An embodiment of the present invention will now be explained with reference to the attached drawings.

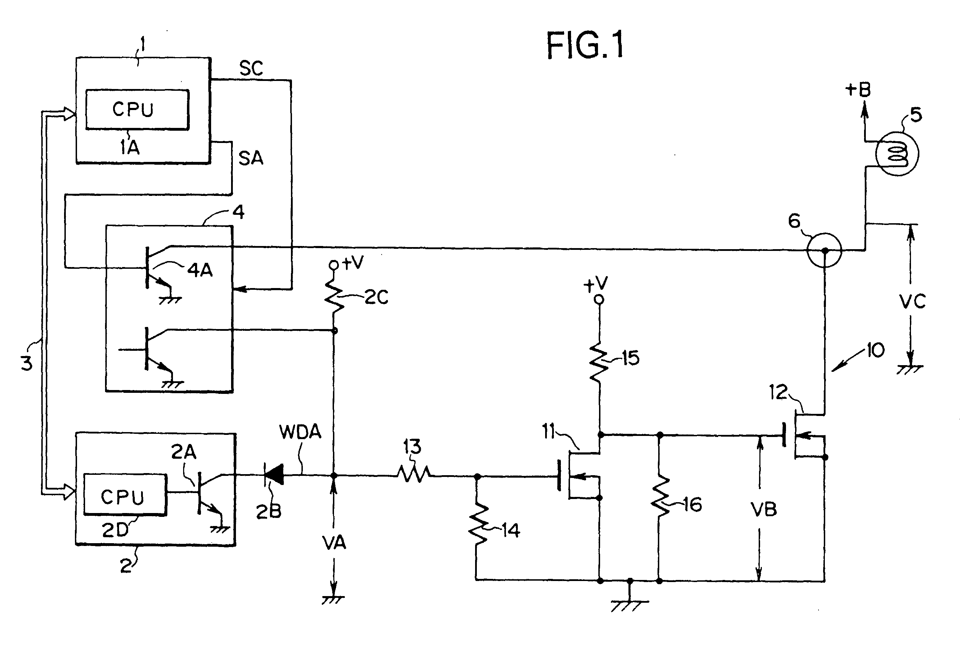

Fig. 1 is a circuit diagram showing an automotive failure diagnosing system that is an embodiment of the present invention. In Fig. 1, reference numeral 1 designates a control microcomputer for conducting operational control of an automotive internal combustion system not shown in the figure, and 2 designates another microcomputer that functions as a monitoring means for monitoring the control operations of the microcomputer 1. In the illustrated configuration, the microcomputers 1 and 2 monitor the operation each other. Although in this embodiment the microcomputer 1 is used to operationally control an automotive internal combustion engine, the present invention is not limited to this arrangement and also encompasses use of the microcomputer 1 for operational control of any of various other kinds of equipment such, for example, a fuel injection system.

The operations of the microcomputer 2 for monitoring the microcomputer 1 will now be explained. The microcomputer 1 and microcomputer 2 exchange data through an interconnecting data bus 3, and the microcomputer periodically checks whether the CPU (central processing unit) 1A of the microcomputer 1 is hung up (operating out of control). When the microcomputer 2 finds that the CPU of the microcomputer 1 is hung up, its CPU 2D turns on a transistor 2A. As a result, the voltage VA at the connection point between a diode 2B and resistor 2C connected between the collector of the transistor 2A and a DC power source +V changes from the power source voltage level to substantially ground level. A voltage signal proportional to the voltage VA is output as a CPU hang-up detection signal WDA.

In response to a control output SC from the microcomputer 1, the CPU hang-up detection signal WDA is input to an electronic control circuit unit 4 for electronically conducting operational control of the vehicle engine (not shown). In an operational mode other than failure diagnosing mode, the electronic control circuit unit 4 responds to the input of the CPU hang-up detection signal WDA by carrying out prescribed processes triggered by the CPU hang-up detection signal WDA so as to implement prescribed control for ensuring that the vehicle does not fall into a dangerous operational state even though CPU 1A of the microcomputer 1 is hung up.

In addition, the microcomputer 1 inputs the electronic control circuit unit 4 with warning display signals SA for various kinds of warnings. A transistor 4A provided in the electronic control circuit unit 4 is on/off controlled by the warning display signals SA to control the lighting of a lamp 5 connected between its collector circuit and the DC power source +V This enables the lamp 5 to be flashed in a prescribed pattern according to the nature of the warning so as to display the warning to the operator. The lamp 5, which is a light-emitting display element, is also used as a display lamp for displaying the result of a CPU hang-up diagnosing that the microcomputer 2 conducts with respect to the microcomputer 1 as explained later.

The microcomputer 2 also has another function of, at prescribed times during a period when the microcomputer 1 is performing control operations normally, or when the CPU of the microcomputer 1 is not hung up, deliberately turning the transistor 2A on to output a CPU hang-up detection signal WDA and thus cause the electronic control circuit unit 4 to operate in response to the so-output CPU hang-up detection signal WDA and deliberately create a malfunction condition in the control system. Moreover, the microcomputer 2 is configured to diagnose whether or not the microcomputer 1 is actually operating normally by checking whether or not it performs operations for suitably coping with the malfunction condition.

In order to avoid interfering with operations for driving the vehicle, the deliberate output of the CPU hang-up detection signal WDA by the microcomputer 2 is not performed during vehicle driving or other control period when the vehicle operation would be affected (ordinary control period) but during some other period such as prior to the ordinary control period. The present embodiment is configured to deliberately output the CPU hang-up detection signal WDA from the microcomputer 2 between the start and completion of program initialization in the microcomputer 1. However, the period other than the ordinary control period is not limited to this.

In Fig. 1, the part designated as a whole by reference numeral 10 is a failure diagnosing display device that, in the automotive failure diagnosing system configured as described in the foregoing, operates in response to the output of a CPU hang-up detection signal WDA by the microcomputer 2 to light the lamp 5 at the time the CPU hang-up detection signal WDA is output.

The failure diagnosing display device 10 consists of switching transistors 11, 12 and resistors 13 - 16 connected as shown and is configured so that the CPU hang-up detection signal WDA is applied to the gate of the switching transistor 11 through the resistor 13. The circuit is configured so that when the voltage VA is low level, i.e., when the CPU hang-up detection signal WDA has been output, the switching transistor 11 is turned off and a high voltage is applied to the gate of the switching transistor 12 to turn the switching transistor 12 on. The drain of the switching transistor 12 is connected to the collector of the transistor 4A of the electronic control circuit unit 4 to configure a wired OR circuit 6. The configuration is therefore such that the lamp 5 lights in response to at least one of the transistor 4A and switching transistor 12 turning on.

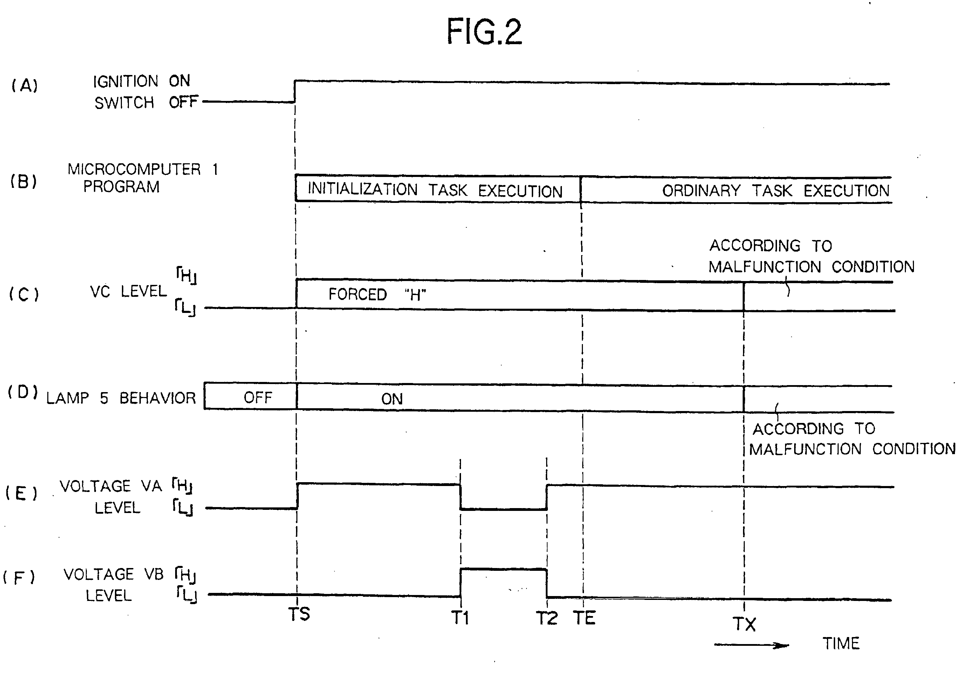

The operation of the failure diagnosing display device 10 will now be explained with reference to Fig. 2. As shown by (A) and (B) of Fig. 2, there is illustrated a case in which execution of a task for initializing a program installed in the microcomputer 1 is commenced when an ignition switch (not shown) is turned from OFF to ON at time TS, and the execution of the initialization task is completed and execution of ordinary tasks begun at time TE. The lamp 5 is connected to an unshown lamp check circuit configured to go into a forced lamp light-up operation during the period from time TE, i.e., the time point at which execution of the initialization task is completed, to a prescribed time TX. After termination of the forced light-up operation at time TX, therefore, the voltage VC on the ground side of the lamp 5 comes to be determined according to the system malfunction condition.

Although Fig. 2 shows the period from time TS to TE to be longer than the period from time TE to TX for convenience of explanation, in actuality the time TS to TE is about 100 - 200 msec and the period for lamp checking between TE and TX is around 2 - 3 sec.

After time TS, if a CPU hang-up detection signal WDA is not output, the level of voltage VA is high level, so that the level of voltage VB, i.e., the gate voltage of the switching transistor 12, is low level. Owing to the deliberate output of a CPU hang-up detection signal WDA from the microcomputer 2 during time T1- T2, voltage VA assumes low level and voltage VB assumes high level during this period, which works to turn the switching transistor 12 ON. However, the warning display signal SA output by the microcomputer 1 is made "H" level during time TS - TE so that the operator will not see any flickering of the lamp 5 caused by lighting of the lamp 5 only during time T1 - T2 in response to the CPU hang-up detection signal WDA deliberately output immediately before the simultaneous light-up operation for checking lamp burnout during the period from time TE to TX. As a result, the transistor 4A turns on, the voltage VC becomes substantially ground level owing to the action of the wired OR circuit 6, and the lamp 5 is put in a forced light-up state between time TS and TE.

Therefore, even though the CPU hang-up detection signal WDA is output between time TS and TE, the lamp 5 does not operate in response thereto. From this it follows that the operator is not caused unnecessary anxiety even if the CPU hang-up detection signal WDA is deliberately output during the period between TS and TE because its output has no effect on the lighting condition of the lamp 5.

A light-up operation for checking the lamp 5 thereafter starts at time TE, whereby the lamp 5 lights together with the other display lamps, and then, after time TX, the light-up operation of the lamp 5 is determined according to the system malfunction condition. Therefore, if the microcomputer 1 hangs up, the lamp 5 lights in response to notify the operator that the microcomputer 1 is hung up.

In the failure diagnosing system shown in Fig. 1, the lamp 5 is kept in a continuously lit condition between the off-to-on switching of the ignition switch and the start of the light-up operation for checking the operation of the lamp and other light-emitting display elements and, therefore, even if a CPU hang-up detection signal WDA for malfunction diagnosis is deliberately output before a lamp burnout check or other such light-emitting display element checking operation, it is possible to prevent this from causing the lamp 5 from assuming a flickering condition or otherwise perform a display operation differing from that of the other lamps. The operator is therefore not made to feel anxiety at the time of turning on the ignition switch.

### INDUSTRIAL APPLICABILITY

As set out in the foregoing, the automotive failure diagnosing system in accordance with the present invention enables the display of failure diagnosing results without producing a flickering condition that would mislead the operator at the time of a display element light-up check and, as such, contributes to the improvement of the automotive failure diagnosing system.

## Claims

1. An automotive failure diagnosing system comprising:
monitoring means for monitoring whether a control microcomputer is hung up and outputting a CPU hang-up detection signal when the microcomputer hangs up; and
a light-emitting display element that operates in response to the CPU hang-up detection signal output by the monitoring means,
a CPU hang-up detection signal for diagnosing failure of the microcomputer being deliberately output from the monitoring means before execution of prescribed control by the microcomputer is commenced,
which automotive failure diagnosing system is **characterized in that** the light-emitting display element is kept continuously lit from the time that an ignition switch is switched from off to on to the time that a light-up operation for checking the light-emitting display element is commenced.

2. An automotive failure diagnosing system as claimed in claim 1, wherein the CPU hang-up detection signal is deliberately output from the monitoring means during an execution period of an initialization task executed prior to execution of the prescribed control.

3. An automotive failure diagnosing system as claimed in claim 2, wherein the light-up operation for checking is conducted for only a prescribed period after completion of execution of the initialization task.

4. An automotive failure diagnosing system as claimed in claim 1, wherein a switching element for controlling hght-up of the light-emitting display element in response to the CPU hang-up detection signal is connected in series with the light-emitting display element.

5. An automotive failure diagnosing system as claimed in claim 4, wherein a wired OR circuit is provided at the connection point of the switching means and the light-emitting display element and, between the time that the ignition switch is switched from off to on and the time that the light-up operation for checking the light-emitting display element is commenced, the wired OR circuit is operated to force the voltage at the connection point to a level for lighting the light-emitting display element.
